(19) **Europäisches Patentamt** / **European Patent Office** / **Office européen des brevets**

(11) **EP 3 447 980 A1**

(12) **EUROPEAN PATENT APPLICATION**
published in accordance with Art. 153(4) EPC

(43) Date of publication:
27.02.2019 Bulletin 2019/09

(21) Application number: 17785254.8

(22) Date of filing: 21.02.2017

(51) Int Cl.:
*H04L 25/49* (2006.01)    *H04L 25/03* (2006.01)

(86) International application number:
**PCT/CN2017/074273**

(87) International publication number:
**WO 2017/181768 (26.10.2017 Gazette 2017/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 18.04.2016 CN 201610243191

(71) Applicant: ZTE Corporation
Shenzhen, Guangdong 518057 (CN)

(72) Inventors:
• LIAO, Qun
  Shenzhen
  Guangdong 518057 (CN)
• CAI, Yi
  Shenzhen
  Guangdong 518057 (CN)
• ZHOU, Weiqin
  Shenzhen
  Guangdong 518057 (CN)

(74) Representative: AWA Sweden AB
Junkersgatan 1
582 35 Linköping (SE)

(54) **SIGNAL PRE-COMPENSATION METHOD AND DEVICE, AND SIGNAL TRANSMITTER**

(57) The present invention discloses a device for signal pre-compensation and a signal transmitter. An input digital domain signal is received through a signal input module. A signal pre-compensation module acquires, according to a frequency domain distortion characteristic of the input digital domain signal passing through a transmitting end device, a tap coefficient of a frequency domain distortion pre-compensation filter of the transmitting end device, and performs pre-compensation on a frequency domain distortion of the transmitting end device. A signal output module outputs a signal after the pre-compensation to the transmitting end device, and herein the transmitting end device includes at least one component damaging the signal.

Receive an input digital domain signal — S101

Acquire a tap coefficient of a frequency domain distortion pre-compensation filter of a transmitting end device according to a frequency domain distortion characteristic of the input digital domain signal passing through the transmitting end device, and perform pre-compensation on the frequency domain distortion of the transmitting end device — S102

Output a signal after the pre-compensation to the transmitting end device, herein the transmitting end device includes at least one component damaging the signal — S103

FIG. 1

**Description**

Technical Field

The present invention relates, but not limited, to the technical field of communications, and in particular to a digital signal transmitter in an optical communication system, especially a method and device for signal pre-compensation, and a signal transmitter.

Background

At present, in an optical communication system, due to the limit of a device manufacturing technique, spectral responses of both an analog device and an optical device are unsatisfactory, which usually causes an inter-symbol interference between signals. The inter-symbol interference will influence an optical receiver on receiving an optical signal correctly and restoring an original transmission signal. Therefore, in order to improve transmission performance of the optical communication system, it is required to compensate a frequency domain distortion of the analog device and the optical device.

Generally, the signal to be compensated generates a distortion, for example, a dispersion distortion, in optical fiber transmission. Distortion compensation is usually performed on a receiving end. A pre-compensation may also be implemented on a transmitting end by using a frequency domain, that is, it is needed to transform the signal to the frequency domain. Usually, a Fast Fourier transform (FFT) module is used to transform a signal from a time domain to the frequency domain. Then a multiplier is used to perform the pre-compensation in the frequency domain. At last, the signal is transformed back to the time domain by using the Inverse Fast Fourier Transform (IFFT).

However, the use of the above technology complicates an operation of compensating the frequency domain distortion generated after the signal passes through the analog device and the optical device, and degrades the transmission performance of the optical communication system.

Summary

The following is an overview of the theme elaborated in this application. The overview is not intended to limit the protection scope of the claims.

The embodiments of the present invention provide a method and device for signal pre-compensation, and a signal transmitter, which may simplify an operation of compensating a frequency domain distortion generated after the signal passes through an analog device and an optical device, and improve transmission performance of an optical communication system.

On the first aspect, a method for signal pre-compensation provided by the embodiments of the present invention includes that:

receiving an input digital domain signal;

acquiring, according to a frequency domain distortion characteristic of the input digital domain signal passing through a transmitting end device, a tap coefficient of a frequency domain distortion pre-compensation filter of the transmitting end device, and performing pre-compensation on a frequency domain distortion of the transmitting end device; and

outputting a signal after the pre-compensation to the transmitting end device, wherein the transmitting end device comprises at least one component damaging the signal.

A method for signal pre-compensation provided by the embodiments of the present invention includes that: the input digital domain signal is received; the tap coefficient of the frequency domain distortion pre-compensation filter of the transmitting end device is acquired according to the frequency domain distortion characteristic of the input digital domain signal passing through the transmitting end device, and the pre-compensation is performed on the frequency domain distortion of the transmitting end device; and the signal after the pre-compensation is output to the transmitting end device, herein the transmitting end device includes at least one component damaging the signal. Considering that the input digital domain signal will be damaged after passing through the transmitting end device, the pre-compensation is performed on the received input digital domain signal in advance; in this way, a signal distortion caused by a frequency domain damage, which is generated by the transmitting end devices like the analog device and the optical device, may be compensated, thereby simplifying the operation of compensating the frequency domain distortion generated after the signal passes through the analog device and the optical device, and improving transmission performance of the optical communication system.

In an embodiment, the act that the input digital domain signal is received includes that:
the input digital domain signal of a symbolic data flow with a double sampling rate obtained by performing digital signal processing on an original bit data flow is received.

By receiving the input digital domain signal of the symbolic data flow with a double sampling rate obtained by performing the digital signal processing on the original bit data flow, the device for signal pre-compensation may prepare quickly to acquire the tap coefficient subsequently.

In an embodiment, the act that the tap coefficient of the frequency domain distortion pre-compensation filter of the transmitting end device is acquired includes that:

a spectral response of the signal pre-compensation is acquired according to a frequency domain transfer function of the transmitting end device;

the spectral response of the signal pre-compensation is transformed to a time domain to generate a time domain transfer function; and

the generated time domain transfer function is truncated, and the tap coefficient of the frequency domain distortion pre-compensation filter of the transmitting end device is acquired.

By using a time domain filter with a predetermined coefficient to perform the pre-compensation on the frequency domain distortion generated after the signal passes through the analog device and the optical device, an operation of pre-compensation is simplified, and the transmission performance of the optical communication system is improved.

In an embodiment, the number of a limited number of tap coefficients is 13.

By using the time domain filter with 13 tap coefficients to perform the pre-compensation on the frequency domain distortion generating after the signal passes through the analog device and the optical device, the operation of pre-compensation is simplified, and the transmission performance of the optical communication system is improved.

In an embodiment, the transmitting end device includes:
a Digital To Analog Converter (DAC), an electric driver, a laser, an optical modulator, an optical filter and an optical amplifier.

Through the above transmitting end devices, a transfer function of the device for signal pre-compensation may be acquired in advance, thereby facilitating the calculation of the tap coefficient used for performing the pre-compensation on the signal, and reducing signal damage as much as possible.

On the second aspect, the embodiments of the present invention provide a device for signal pre-compensation, which includes: a signal input module 10, a signal pre-compensation module 20, and a signal output module 30.

The signal input module 10 is configured to receive the input digital domain signal.

The signal pre-compensation module 20 is configured to acquire, according to the frequency domain distortion characteristic of the input digital domain signal passing through the transmitting end device, the tap coefficient of the frequency domain distortion pre-compensation filter of the transmitting end device, and perform the pre-compensation on the frequency domain distortion of the transmitting end device.

The signal output module 30 is configured to output the signal after the pre-compensation to the transmitting end device, herein the transmitting end device includes at least one component damaging the signal.

A device for signal pre-compensation provided by the embodiments of the present invention includes: the signal input module 10, the signal pre-compensation module 20, and the signal output module 30. The signal input module 10 receives the input digital domain signal. The signal pre-compensation module 20 acquires, according to the frequency domain distortion characteristic of the input digital domain signal passing through the transmitting end device, the tap coefficient of the frequency domain distortion pre-compensation filter of the transmitting end device, and performs the pre-compensation on the frequency domain distortion of the transmitting end device. The signal output module 30 outputs the signal after the pre-compensation to the transmitting end device, and herein the transmitting end device includes at least one component damaging the signal. Considering that the input digital domain signal will be damaged after passing through the transmitting end device, the pre-compensation is performed on the received input digital domain signal in advance; in this way, the signal distortion caused by the frequency domain damage, which is generated by the transmitting end devices like the analog device and the optical device, may be compensated, thereby simplifying the operation of compensating the frequency domain distortion generating after the signal passes through the analog device and the optical device, and improving the transmission performance of the optical communication system.

In an embodiment, that the signal input module 10 is configured to receive the input digital domain signal includes that:
the signal input module 10 is configured to receive the input digital domain signal of the symbolic data flow with a double sampling rate obtained by performing the digital signal processing on the original bit data flow.

By receiving the input digital domain signal of the symbolic data flow with a double sampling rate obtained by performing the digital signal processing on the original bit data flow, the device for signal pre-compensation may prepare quickly to acquire the tap coefficient subsequently.

In an embodiment, that the signal pre-compensation module 20 is configured to acquire the tap coefficient of the frequency domain distortion pre-compensation filter of the transmitting end device means that:

the signal pre-compensation module 20 is configured to acquire the spectral response of the signal pre-compensation according to the frequency domain transfer function of the transmitting end device,

transform the spectral response of the signal pre-compensation to the time domain to generate the time domain transfer function, and

truncate the generated time domain transfer function, and acquire the tap coefficient of the frequency domain distortion pre-compensation filter of the transmitting end device.

By using the time domain filter with the predetermined coefficient to perform the pre-compensation on the frequency domain distortion of the signal generated after the signal passes through the analog device and the optical device, the operation of pre-compensation is simplified, and the transmission performance of the optical communication system is improved.

In an embodiment, the number of a limited number of tap coefficients is 13.

By using the time domain filter with 13 tap coefficients to perform the pre-compensation on the frequency domain distortion generating after the signal passes through the analog device and the optical device, the operation of pre-compensation is simplified, and the transmission performance of the optical communication system is improved.

In an embodiment, the transmitting end device includes:

the DAC, the electric driver, the laser, the optical modulator, the optical filter and the optical amplifier.

Through the above transmitting end devices, the transfer function of the device for signal pre-compensation may be acquired in advance, thereby facilitating the calculation of the tap coefficient used for performing the pre-compensation on the signal, and reducing the signal damage as much as possible.

On the third aspect, the embodiments of the present invention provide a signal transmitter, which includes any above device for signal pre-compensation.

The signal transmitter provided by the embodiments of the present invention includes the device for signal pre-compensation in any embodiment. Considering that the input digital domain signal will be damaged after passing through the transmitting end device, the pre-compensation is performed on the received input digital domain signal in advance; in this way, the signal distortion caused by the frequency domain damage, which is generated by the transmitting end devices like the analog device and the optical device, may be compensated, thereby simplifying the operation of compensating the frequency domain distortion generating after the signal passes through the analog device and the optical device, and improving the transmission performance of the optical communication system.

On the fourth aspect, the embodiments of the present invention also provide a computer-readable storage medium storing a computer-executable instruction. The computer-executable instruction is used for performing the above method.

Other aspects can be understood after the accompanying drawings and detailed descriptions are read and understood.

Brief Description of Drawings

FIG. 1 is a flowchart of a method for signal pre-compensation provided by the first embodiment of the present invention.

FIG. 2 is a schematic diagram of signal transmission in the method for signal pre-compensation according to an embodiment of the present invention.

FIG. 3 is a schematic diagram of a frequency domain characteristic of a component damaging a signal in the method for signal pre-compensation according to an embodiment of the present invention.

FIG. 4 is a schematic diagram of a frequency domain characteristic of a device for signal pre-compensation in the method for signal pre-compensation according to an embodiment of the present invention.

FIG. 5 is a schematic diagram of a frequency domain characteristic after signal pre-compensation in the method for signal pre-compensation according to an embodiment of the present invention.

FIG. 6 is an implementation block diagram of the method for signal pre-compensation according to an embodiment of the present invention.

FIG. 7 is a table of predetermined coefficients acquired in the method for signal pre-compensation according to an embodiment of the present invention.

FIG. 8 is a structure diagram of a device for signal pre-compensation provided by the second embodiment of the present invention.

FIG. 9 is a structure diagram of a signal transmitter provided by the third embodiment of the present invention.

Detailed Description

The embodiments of the present invention are elaborated below in combination with the accompanying drawings. It is to be noted that the embodiments in the present application and the characteristics in the embodiments may be combined under the condition of no conflicts.

The steps presented in the flowchart of the accompanying drawings may be executed in a computer system like a group of computer-executable instructions. Besides, although a logical sequence is shown in the flowchart, in some cases, the presented or described steps may be performed in a sequence different from that described here.

The method involved in the embodiments of the present invention may be applied to a device needing to perform pre-compensation on a signal, for example, a digital signal transmitter in the optical communication system. A transmitting end of the transmitter may include, but not limited to, a digital signal processing module, a pre-compensation device, a Digital To Analog Converter (DAC), an electric driver, a laser, a Mach-Zehnder modulator, an optical filter, an optical amplifier, and so on.

The embodiments below may be combined, and the same or similar concepts or processes which have been described will not be repeated in other embodiments.

First embodiment

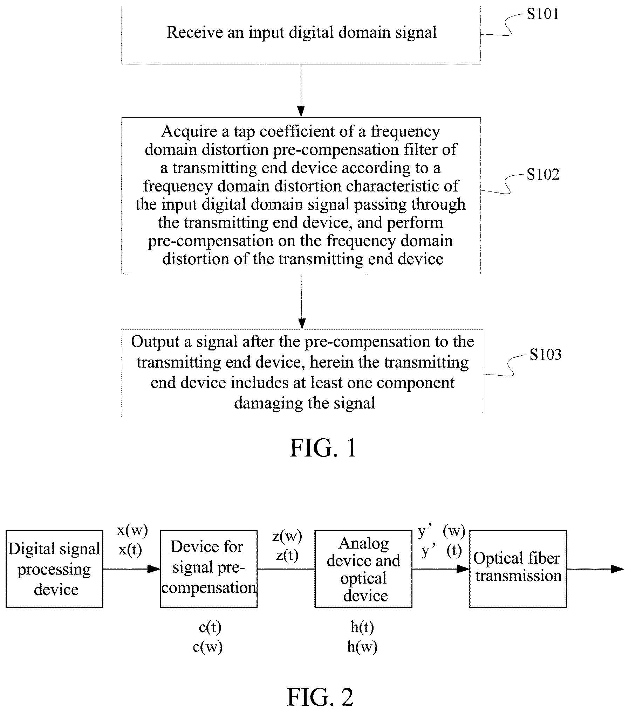

FIG. 1 is a flowchart of a method for signal pre-compensation provided by the first embodiment of the present invention. The present embodiment involves a process of performing pre-compensation on a frequency domain distortion generated after the signal passes through an analog device and an optical device. As shown in FIG. 1, the method includes the following steps.

In step S101, an input digital domain signal is received.

The digital domain signal is the signal obtained by performing front-end digital signal processing on original bit data from an encoder. The front-end digital signal processing may be performed through, but not limited to, modulation, up-sampling and shaped filtering digital signal processing.

In step S102, a tap coefficient of a frequency domain distortion pre-compensation filter of a transmitting end device is acquired according to a frequency domain distortion characteristic of the input digital domain signal passing through the transmitting end device, and pre-compensation is performed on the frequency domain distortion of the transmitting end device.

A time domain expression of the received input digital domain signal is x(t), and a frequency domain expression of the received input digital domain signal is x(w). After passing through an electric device like the DAC and an optical device, the time domain expression of the input digital domain signal becomes y(t), and the frequency domain expression becomes y(w). The time domain expression of the transfer function of the analog device and the optical device is h(t), and the frequency domain expression is h(w), then $y(t) = x(t) \otimes h(t)$, where $\otimes$ is convolving, and $y(w) = x(w) \otimes h(w)$. An ideal state is that the received digital domain signal has no damage after passing through these transmitting end devices, that is, y(t)=x(t). But in fact, these transmitting end devices will damage the signal, so generally, h(t) is not equal to 1, which degrades the overall transmission performance. FIG. 2 is a schematic diagram of signal transmission in the method for signal pre-compensation. As shown in FIG. 2, the signal pre-compensation may be performed by performing the pre-compensation on the signal passing through the analog device and the optical device. That is, signal pre-compensation is performed before passing through these transmitting end devices by the device for signal pre-compensation. The time domain expression of the transfer function of the device for signal pre-compensation is c(t), and the frequency domain expression is c(w), then the time domain expression of the signal after passing through the device for signal pre-compensation, the analog device and the optical device is y(t), and the frequency domain expression is y(w), so in the frequency domain, *y'(w)* = x(*w*)⊗c(*w*)⊗h(*w*). In order to achieve the ideal state, that is *y'(w)* = x(*w*), *c(w)* = $h^{-1}(w)$ could be made. Generally, the IFFT is used to transform the transfer function c(w) of the device for signal pre-compensation into the time domain expression. The transfer function for transforming into the time domain expression is as follows:

$$c(t) = IFFT(c(w)) = IFFT(h^{-1}(w))$$

According to the above formula, the transfer function of the device for signal pre-compensation may be obtained according to a frequency domain transfer function h(w) of the analog device and the optical device, and then a time domain transfer function c(t) of the device for signal pre-compensation may be obtained by using the IFFT, namely a time domain filter model. The tap coefficient of the time domain filter model for frequency domain distortion pre-compensation of the transmitting end device may be acquired. The number of acquired tap coefficients of the time domain transfer function c(t) for signal pre-compensation is infinite, but the infinite number of tap coefficients cannot be realized in a real system, so it is needed to reduce the number of tap coefficients, that is, a predetermined number of tap coefficients are selected to perform the pre-compensation on the frequency domain distortion of the transmitting end device, which depends on the actual situation, so that the damage to the signal caused by the analog device and the optical device may be compensated better, and the transmission performance of the optical communication system is improved.

In step S103, a signal after the pre-compensation is output to the transmitting end device, and the transmitting end device includes at least one component damaging the signal.

After the signal pre-compensation is performed, through the device for signal pre-compensation, on the frequency domain distortion characteristic of the received input digital domain signal passing through the transmitting end device, the signal after the pre-compensation is output to the transmitting end device. The transmitting end devices include, but not limited to, at least one of the DAC, the electric driver, the laser, the optical modulator, the optical filter, and the optical amplifier, which will all cause a damage to the received input digital domain signal.

In the method for transmitting end pre-compensation provided by the embodiments of the present invention, the input digital domain signal is received; the tap coefficient of the frequency domain distortion pre-compensation filter of the transmitting end device is acquired according to the frequency domain distortion characteristic of the input digital domain signal passing through the transmitting end device, and the pre-compensation is performed on the frequency domain distortion of the transmitting end device; and the signal after the pre-compensation is output to the transmitting end device, herein the transmitting end device includes at least one component damaging the signal. Considering that the input digital domain signal will be damaged after passing through the transmitting end device, the pre-compensation is performed on the received input digital domain signal in advance and so the signal distortion caused by the frequency domain damage, which is generated by the transmitting end devices like the analog device and the optical device, may be compensated, thereby simplifying the operation of compensating the frequency domain distortion generated after the signal passes through the analog device and the optical device, and improving the transmission performance of the optical communication system.

In an implementation, based on the above embodiment, the act that the input digital domain signal is received in step S101 includes that:

receiving the input digital domain signal of a symbolic data flow with a double sampling rate obtained by performing digital signal processing on an original bit data flow.

The original data is the original bit data coming from the encoder. The front-end digital signal processing, which includes, but not limited to, the modulation, the up-sampling and the shaped filtering digital signal processing, may be performed on the original bit data flow through a front-end digital signal processing module. The input digital domain signal of the symbolic data flow with a double sampling rate is obtained after the above digital signal processing, but the processing is not limited to the listed.

By receiving the input digital domain signal of the symbolic data flow with a double sampling rate obtained by performing the digital signal processing on the original bit data flow, the device for signal pre-compensation may prepare quickly to acquire the tap coefficient subsequently.

In an implementation, based on the above embodiment, the act that the tap coefficient of the frequency domain distortion pre-compensation filter of the transmitting end device is acquired includes that:

a spectral response of the signal pre-compensation is acquired according to the frequency domain transfer function of the transmitting end device;

the spectral response of the signal pre-compensation is transformed to the time domain to generate the time domain transfer function; and

the generated time domain transfer function is truncated, and the tap coefficient of the frequency domain distortion pre-compensation filter of the transmitting end device is acquired.

The number of acquired tap coefficients of the time domain transfer function c(t) for signal pre-compensation in the above embodiment is infinite, but the infinite number of tap coefficients cannot be realized in the real system, so it is needed to reduce the number of tap coefficients and acquire a limited number of tap coefficients of the time domain filter. For example, it is possible to generate a frequency response of the device for signal pre-compensation (which is obtained by adding the frequency responses of all the devices) by using the frequency domain transfer function of a device provided by a device manufacturer of the transmitting end device damaging the signal, and an inverse function can be obtained according to the frequency response of the device for signal pre-compensation to generate a reverse response of the frequency response, namely the spectral response of the device for signal pre-compensation, and then transform the spectral response of the device for signal pre-compensation to the time domain. For example, the time domain transfer function may be generated by using the IFFT of 256 points; then the time domain transfer function is truncated to reserve only a certain number of taps of intermediate frequency, thereby generating the tap coefficient of the time domain filter; at last, the generated tap coefficient of the time domain filter is applied to the time domain filter, thereby implementing signal pre-compensation.

An example is given below.

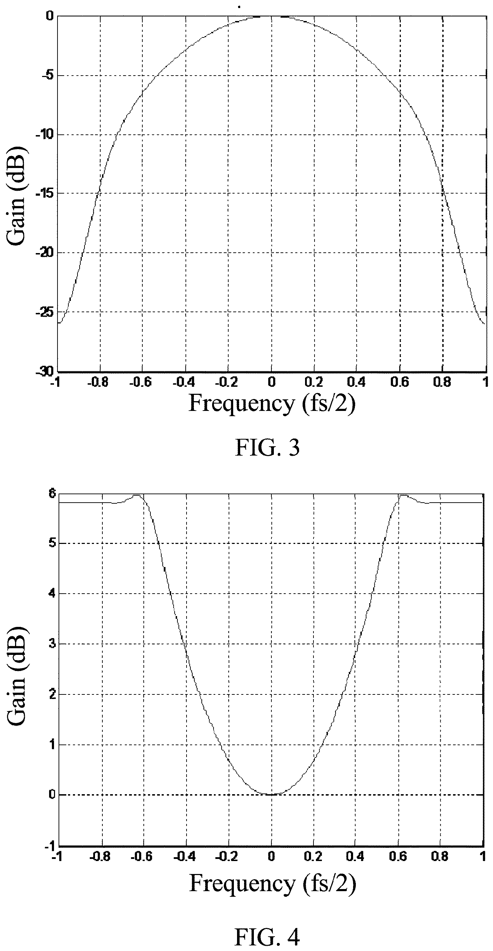

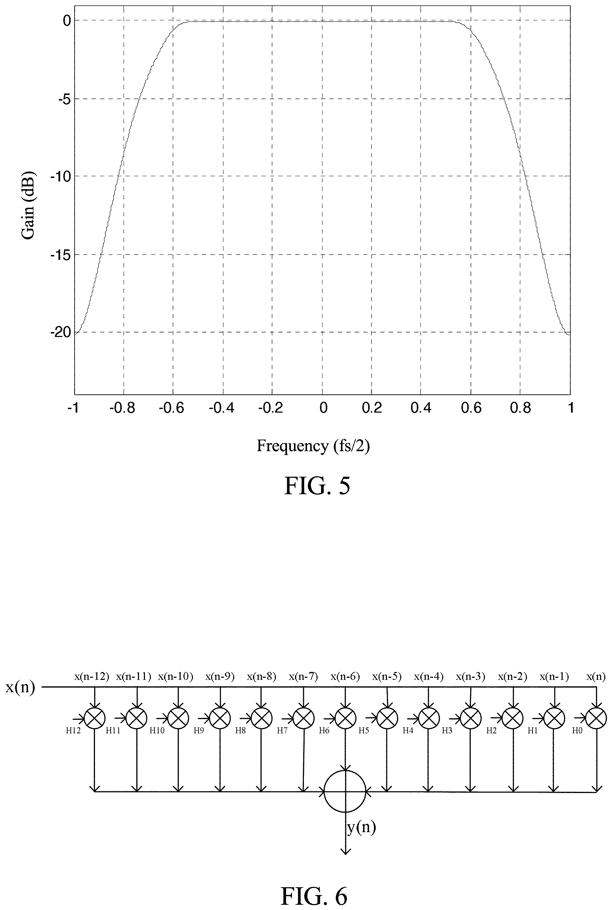

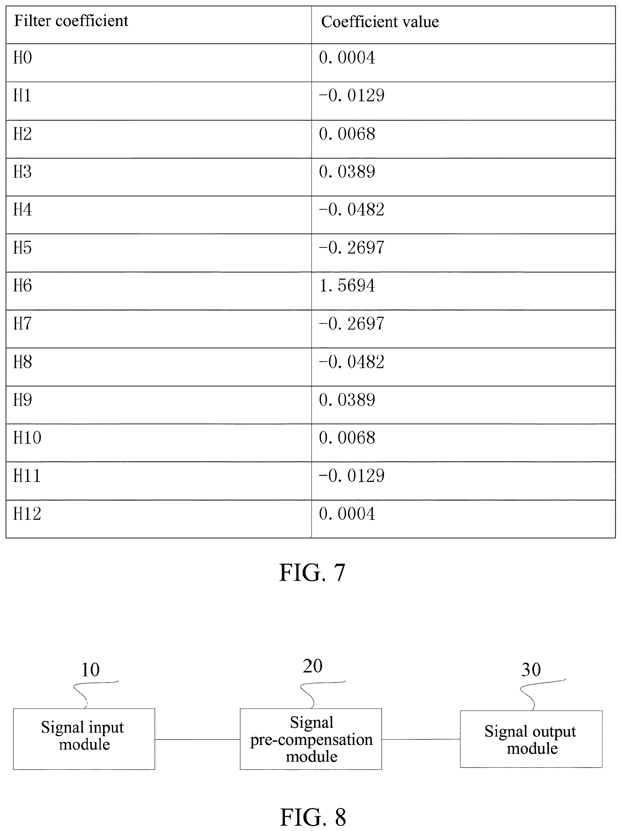

FIG. 3 is a schematic diagram of a frequency domain characteristic of a component damaging a signal in the method for signal pre-compensation according to an embodiment of the present invention. FIG. 4 is a schematic diagram of a frequency domain characteristic of a device for signal pre-compensation in the method for signal pre-compensation according to an embodiment of the present invention. FIG. 5 is a schematic diagram of a frequency domain characteristic of a transmitting end in the method for signal pre-compensation according to an embodiment of the present invention. FIG. 6 is an implementation block diagram of the method for signal pre-compensation according to an embodiment of the present invention, namely of a schematic diagram of an implementation of a pre-compensation filter for a frequency domain distortion. FIG. 7 is a table of predetermined coefficients acquired in the method for signal pre-compensation according to an embodiment of the present invention. As shown in FIG. 3 to FIG. 7, generally speaking, the frequency domain transfer function of the transmitting end device is provided by the device manufacturer. As shown in FIG. 3, the x-coordinate is a digital domain frequency, which is usually from -0.5 to 0.5; the y-coordinate is a gain. It can be seen from FIG. 3 that the signal has a large attenuation in a frequency domain passband, and it is needed to compensate the passband attenuation to improve the transmission performance. FIG. 4 shows the frequency domain transfer function of the device for signal pre-compensation, and it can be seen that the frequency domain transfer function plays a certain role of compensating a gain of the signal in the passband. FIG. 5 shows the frequency domain transfer function obtained by using the frequency domain transfer function generated by the device for signal pre-compensation in FIG. 4 to compensate the damage caused by the device damaging the signal in FIG. 3. It can be seen from FIG. 5 that the signal in the passband basically has no attenuation, and is very flat. It can be concluded that the device for signal pre-compensation is actually a filter. In the above embodiment, the time domain transfer function for pre-compensation of the transmitting end is set to c(t), then the number of the coefficients (namely the taps) of the time domain transfer function c(t) for pre-compensation of the transmitting end is infinite, but the infinite number of taps cannot be realized in the real system, so it is needed to reduce the number of taps and acquire the predetermined coefficient of the time domain filter.

By using the time domain filter with the predetermined coefficient to perform the pre-compensation on the frequency domain distortion of the signal generated after the signal passes through the analog device and the optical device, the operation of pre-compensation is simplified, and the transmission performance of the optical communication system is improved.

In an implementation, based on the above embodiment, the number of tap coefficients maybe 13.

Taking a filter with 13 taps for example, as shown in FIG. 6, x(n) is a input signal, and y(n) is an output signal, then a calculation formula is as follows:

$$y(n) = x(n) \bullet H0 + x(n-1) \bullet H1 + x(n-2) \bullet H2 + x(n-3) \bullet H3 + x(n-4) \bullet H4 + x(n-5) \bullet H5 + x(n-6) \bullet H6 + ...$$
$$x(n-7) \bullet H7 + x(n-8) \bullet H8 + x(n-9) \bullet H9 + x(n-10) \bullet H10 + x(n-11) \bullet H11 + x(n-12) \bullet H12$$ .

For the IFFT of $c(t) = IFFT(c(w)) = IFFT(h^{-1}(w))$, the IFFT of 256 points is adopted. Because the IFFT is 256 points, the final time domain transfer function has 256 taps, and it is possible to extract 13 taps in the middle of the 256 taps as the tap coefficients of the final time domain filter. A possible scenario of the value of the tap coefficient of the filter is as shown in FIG. 7.

By using the time domain filter with 13 tap coefficients to perform the pre-compensation on the frequency domain distortion generated after the signal passes through the analog device and the optical device, the operation of pre-compensation is simplified, and the transmission performance of the optical communication system is improved.

In an implementation, based on the above embodiment, the transmitting end devices include: the DAC, the electric driver, the laser, the optical modulator, the optical filter and the optical amplifier. Descriptions are as follows.

The DAC may convert the received digital signal into an analog electrical signal, and send the analog electrical signal to the following-up electrical driver module. Moreover, there is also a low-pass electric filter in the DAC, which filters and shapes the electrical signal.

The electrical driver, which is essentially an electrical domain amplifier, amplifies the electrical signal to a work scope of the following-up Mach-Zehnder modulator.

The laser functions in generating a light source of local oscillator to be input into the following-up modulator.

The Mach-Zehnder modulator converts the electrical signal into an optical signal. All subsequent signals of the modulator are the optical signals. Moreover, there is also an electrical filter in the modulator, which further filters the electrical signal.

The optical filter filters in an optical domain, and functions in combining waves of the optical signals with different wavelengths.

The optical amplifier amplifies the optical signal, and then emits the amplified optical signal to an optical fiber to be transmitted.

The transmitting end devices include, but not limited to, these above devices.

Through the above transmitting end devices, the transfer function of the device for signal pre-compensation may be acquired in advance, thereby facilitating the calculation of the tap coefficient used for performing the pre-compensation on the signal, and reducing the signal damage as much as possible.

Second embodiment

FIG. 8 is a structure diagram of the device for signal pre-compensation provided by the second embodiment of the present invention, which includes: a signal input module 10, a signal pre-compensation module 20, and a signal output module 30.

The signal input module 10 is configured to receive the input digital domain signal.

The signal pre-compensation module 20 is configured to acquire, according to the frequency domain distortion characteristic of the input digital domain signal passing through the transmitting end device, the tap coefficient of the frequency domain distortion pre-compensation filter of the transmitting end device, and perform the pre-compensation on the frequency domain distortion of the transmitting end device.

The signal output module 30 is configured to output the signal after the pre-compensation to the transmitting end device, herein the transmitting end device includes at least one component damaging the signal.

The device for signal pre-compensation provided by the embodiments of the present invention includes: the signal input module, the signal pre-compensation module, and the signal output module. The signal input module receives the input digital domain signal. The signal pre-compensation module acquires, according to the frequency domain distortion characteristic of the input digital domain signal passing through the transmitting end device, the tap coefficient of the frequency domain distortion pre-compensation filter of the transmitting end device, and performs the pre-compensation on the frequency domain distortion of the transmitting end device. The signal output module outputs the signal after the pre-compensation to the transmitting end device, and herein the transmitting end device includes at least one component damaging the signal. Considering that the input digital domain signal will be damaged after passing through the transmitting end device, the pre-compensation is performed on the received input digital domain signal in advance; in this way, the signal distortion caused by the frequency domain damage, which is generated by the transmitting end devices like the analog device and the optical device, may be compensated, thereby simplifying the operation of compensating the frequency domain distortion generating after the signal passes through the analog device and the optical device, and improving transmission performance of the optical communication system.

In an implementation, based on the above embodiment, that the signal input module 10 is configured to receive the input digital domain signal includes that:

the signal input module 10 is configured to receive the input digital domain signal of the symbolic data flow with a double sampling rate obtained by performing the digital signal processing on the original bit data flow.

The device provided by the embodiments of the present invention may perform the embodiment of the method, and the implementation principle and technical effect are similar, so they will not be repeated here.

In an implementation, based on the above embodiment, that the signal pre-compensation module 20 is configured to acquire the tap coefficient of the frequency domain distortion pre-compensation filter of the transmitting end device means that:

the signal pre-compensation module 20 is configured to acquire the spectral response of the signal pre-compensation according to the frequency domain transfer function of the transmitting end device,

transform the spectral response of the signal pre-compensation to the time domain to generate the time domain transfer function, and

truncate the generated time domain transfer function, and acquire the tap coefficient of the frequency domain distortion pre-compensation filter of the transmitting end device.

In an implementation, based on the above embodiment, the number of tap coefficients is 13.

In an implementation, based on the above embodiment, the transmitting end devices include:
the DAC, the electric driver, the laser, the optical modulator, the optical filter and the optical amplifier.

It is to be noted that the device for signal pre-compensation described in the present embodiment is the device corresponding to the method for signal pre-compensation described in the first embodiment. All the implementations in the embodiment of the method are applied to the embodiment of the device, and the same technical effect may be achieved.

Third embodiment

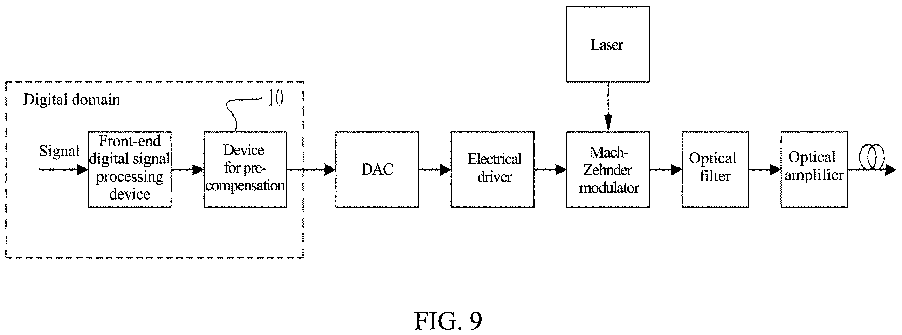

FIG. 9 is a structure diagram of a signal transmitter provided by the third embodiment of the present invention, which includes any device for signal pre-compensation in the above embodiment.

The signal transmitter (or called a transmitting end of a transmitter) may also include a front-end digital signal processing device and a transmitting end device. The transmitting end device includes the DAC, the electrical driver, the laser, the Mach-Zehnder modulator, the optical filter and the optical amplifier. The front-end digital signal processing module performs the front-end digital signal processing, which includes, but not limited to, the modulation, the up-sampling and the shaped filtering digital signal processing, on the received original bit data flow, and then the signal after being processed by the module is sent to the following-up device for signal pre-compensation. The device for signal pre-compensation, which is essentially a time domain filter, performs the pre-compensation on the received signal to make the final optical signal transmitted in the optical fiber as flat as possible in the frequency domain passband, and then sends the signal after being processed by the device for signal pre-compensation to the following-up digital analog conversion module. The DAC converts the received digital signal into the analog electrical signal, and sends the analog electrical signal to the following-up electrical driver module. Moreover, there is also the low-pass electric filter in the DAC, which filters and shapes the electrical signal. The electrical driver, which is essentially the electrical domain amplifier, amplifies the electrical signal to the work scope of the following-up Mach-Zehnder modulator; then the signal after being processed by the module is transmitted to the following Mach-Zehnder modulator. The laser generates the light source of local oscillator, and then transmits the optical signal to the Mach-Zehnder modulator. The Mach-Zehnder modulator converts the electrical signal into the optical signal; then the signal after being processed by the module is transmitted to the following-up optical filter module. The optical filter filters the optical signal in the optical domain, and functions in combining waves of the optical signals with different wavelengths; then, the optical signal after being processed by the module is transmitted to the following-up optical amplifier module. The optical amplifier amplifies the optical signal, and then emits the processed optical signal to the optical fiber to be transmitted, thereby improving the transmission performance of the optical communication system.

The signal transmitter provided by the embodiments of the present invention includes the device for signal pre-compensation in any above embodiment. Considering that the input digital domain signal will be damaged after passing through the transmitting end device, the pre-compensation is performed on the received digital domain input signal in advance; in this way, the signal distortion caused by the frequency domain damage, which is generated by the transmitting end devices like the analog device and the optical device, may be compensated, thereby simplifying the operation of compensating the frequency domain distortion generating after the signal passes through the analog device and the optical device, and improving transmission performance of the optical communication system.

Those with ordinary skill in the art may understand that all or some of the steps in the above disclosed method, and the function modules/units in the system and device may be implemented as software, firmware, hardware, and a proper combination thereof. In an implementation of hardware, the division among the function modules/units mentioned in the above description does not necessarily correspond to the division of physical units; for example, a physical component may have multiple functions, or a function or step may be performed by several physical components in coordination. Some or all of the components may be implemented as software performed by a processor, for example, a digital signal processor or a microprocessor, or as hardware, or as an integrated circuit, for example, an application-specific integrated circuit. Such software may be distributed on computer readable media. The computer readable media may include computer storage media (or non-temporary media) and communication media (or temporary media). As those of ordinary skill in the art know, the term computer storage media include volatile and non-volatile media, and removable and un-removable media which are implemented in any method or technology for storing information (such as a computer readable instruction, a data structure, a program module or other data). The computer storage media include, but not limited to, an RAM, an ROM, an EEPROM, a flash memory or other memory technologies, a CD-ROM, a Digital Video Disk (DVD) or other optical storage, a cartridge, a tape, a disk storage or other magnetic storage devices, or any other media which may be used for storing expected information and may be accessed by a computer. Moreover, as those of ordinary skill in the art know, the communication media generally include the computer readable instruction, the data structure, the program module or other data, such as carriers or other transmission mechanisms, in a modulation data signal, and may include any information delivery media.

Although the implementations disclosed by the present invention are as above, the contents are the implementations only adopted for facilitating understanding, but not intended to limit, the present invention. Any skilled in the art of the present invention may make any modification and change on implementation forms and details without departing from the spirit and scope disclosed by the present invention, but the protection scope of the present application is still subject to the scope limited by the claims attached.

Industrial Applicability

In the embodiments of the present invention, considering that the digital domain input signal will be damaged after passing through the transmitting end device, the pre-compensation is performed on the received digital domain input signal in advance; in this way, the signal distortion caused by the frequency domain damage, which is generated by the transmitting end devices like the analog device and the optical device, may be compensated, thereby simplifying the operation of compensating the frequency domain distortion generating after the signal passes through the analog device and the optical device, and improving transmission performance of the optical communication system.

**Claims**

1.  A method for signal pre-compensation, comprising:

    receiving an input digital domain signal;
    acquiring, according to a frequency domain distortion characteristic of the input digital domain signal passing through a transmitting end device, a tap coefficient of a frequency domain distortion pre-compensation filter of the transmitting end device, and performing pre-compensation on a frequency domain distortion of the transmitting end device; and
    outputting a signal after the pre-compensation to the transmitting end device, wherein the transmitting end device comprises at least one component damaging the signal.

2.  The method as claimed in claim 1, wherein receiving the input digital domain signal comprises:

    receiving the input digital domain signal of a symbolic data flow with a double sampling rate obtained by performing digital signal processing on an original bit data flow.

3.  The method as claimed in claim 1, wherein acquiring the tap coefficient of the frequency domain distortion pre-compensation filter of the transmitting end device comprises:

    acquiring a spectral response of the signal pre-compensation according to a frequency domain transfer function of the transmitting end device;
    transforming the spectral response of the signal pre-compensation to a time domain to generate a time domain transfer function; and
    truncating the generated time domain transfer function, and acquiring the tap coefficient of the frequency domain distortion pre-compensation filter of the transmitting end device.

4.  The method as claimed in claim 3, wherein a number of tap coefficients is 13.

5.  The method as claimed in claim 1, wherein the transmitting end device comprises:

    a Digital To Analog Converter, DAC, an electric driver, a laser, an optical modulator, an optical filter and an optical amplifier.

6.  A device for signal pre-compensation, comprising: a signal input module (10), a signal pre-compensation module (20), and a signal output module (30); wherein,

the signal input module (10) is configured to receive an input digital domain signal;

the signal pre-compensation module (20) is configured to acquire, according to a frequency domain distortion characteristic of the input digital domain signal passing through a transmitting end device, a tap coefficient of a frequency domain distortion pre-compensation filter of the transmitting end device, and perform pre-compensation on a frequency domain distortion of the transmitting end device; and

the signal output module (30) is configured to output a signal after the pre-compensation to the transmitting end device, wherein the transmitting end device comprises at least one component damaging the signal.

7. The device as claimed in claim 6, wherein the signal input module (10) is configured to receive the input digital domain signal, comprising:

the signal input module (10) is configured to receive the input digital domain signal of a symbolic data flow with a double sampling rate obtained by performing digital signal processing on an original bit data flow.

8. The device as claimed in claim 6, wherein the signal pre-compensation module (20) is configured to acquire the tap coefficient of the frequency domain distortion pre-compensation filter of the transmitting end device, comprising:

the signal pre-compensation module (20) is configured to acquire a spectral response of the signal pre-compensation according to a frequency domain transfer function of the transmitting end device,

transform the spectral response of the signal pre-compensation to a time domain to generate a time domain transfer function, and

truncating the generated time domain transfer function, and acquiring the tap coefficient of the frequency domain distortion pre-compensation filter of the transmitting end device.

9. The device as claimed in claim 8, wherein a number of tap coefficients is 13.

10. The device as claimed in claim 6, wherein the transmitting end device comprises:

a Digital To Analog Converter, DAC, an electric driver, a laser, an optical modulator, an optical filter and an optical amplifier.

11. A signal transmitter, comprising a device for signal pre-compensation as claimed in any one of claims 6 to 10.

12. A computer-readable storage medium, storing a computer-executable instruction, wherein the computer-executable instruction is used for performing a method as claimed in any one of claims 1 to 5.

```
┌─────────────────────────────────────────────────┐
│                                                 │ ⟋ S101
│      Receive an input digital domain signal     │
│                                                 │
└─────────────────────────────────────────────────┘
                        │
                        ▼
┌─────────────────────────────────────────────────┐
│      Acquire a tap coefficient of a frequency   │
│  domain distortion pre-compensation filter of   │
│    a transmitting end device according to a     │ ⟋ S102
│  frequency domain distortion characteristic of  │
│  the input digital domain signal passing through│
│    the transmitting end device, and perform     │
│     pre-compensation on the frequency domain    │
│     distortion of the transmitting end device   │
└─────────────────────────────────────────────────┘
                        │
                        ▼
┌─────────────────────────────────────────────────┐
│  Output a signal after the pre-compensation to the│
│   transmitting end device, herein the transmitting│ ⟋ S103
│    end device includes at least one component   │
│              damaging the signal                │
└─────────────────────────────────────────────────┘
```

FIG. 1

```
                    x(w)                  z(w)                    y'(w)
┌──────────────┐    x(t)   ┌──────────┐   z(t)   ┌──────────┐    y'(t)   ┌──────────┐
│Digital signal│           │Device for│          │ Analog   │           │Optical fiber│
│  processing  │──────────▶│signal pre-│────────▶│device and│──────────▶│transmission │────▶
│   device     │           │compensation│         │ optical  │           │            │
└──────────────┘           └──────────┘          │  device  │           └──────────┘
                              c(t)               └──────────┘
                              c(w)                  h(t)
                                                    h(w)
```

FIG. 2

FIG. 3

FIG. 4

FIG. 5

FIG. 6

| Filter coefficient | Coefficient value |
|---|---|
| H0 | 0. 0004 |
| H1 | −0. 0129 |
| H2 | 0. 0068 |
| H3 | 0. 0389 |
| H4 | −0. 0482 |
| H5 | −0. 2697 |
| H6 | 1. 5694 |
| H7 | −0. 2697 |
| H8 | −0. 0482 |
| H9 | 0. 0389 |
| H10 | 0. 0068 |
| H11 | −0. 0129 |
| H12 | 0. 0004 |

FIG. 7

```
  10                    20                    30

Signal input      Signal              Signal output
module       pre-compensation        module
                  module
```

FIG. 8

FIG. 9

## INTERNATIONAL SEARCH REPORT

| International application No. |
|---|
| **PCT/CN2017/074273** |

**A. CLASSIFICATION OF SUBJECT MATTER**

H04L 25/49 (2006.01) i; H04L 25/03 (2006.01) i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC: signal compensation, optical communication, signal, compensation, transmitter, sender, distortion, frequency domain, time domain, tap, optical, filter

**C. DOCUMENTS CONSIDERED TO BE RELEVANT**

| Category* | Citation of document, with indication, where appropriate, of the relevant passages | Relevant to claim No. |
|---|---|---|
| X | CN 101547178 A (XIDIAN UNIVERSITY), 30 September 2009 (30.09.2009), description, page 5, line 20 to page 9, line 20 | 1-2, 5-7, 10-12 |
| A | CN 102143108 A (UNIVERSITY OF ELECTRONIC SCIENCE AND TECHNOLOGY OF CHINA), 03 August 2011 (03.08.2011), the whole document | 1-12 |
| A | US 2013216239 A1 (TYCO ELECTRONICS SUBSEA COMMUNICATIONS LLC), 22 August 2013 (22.08.2013), the whole document | 1-12 |
| A | CN 101228760 A (MEDIAPHY CORPORATION), 23 July 2008 (23.07.2008), the whole document | 1-12 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 April 2017 (24.04.2017) | **22 May 2017 (22.05.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Bo** Telephone No.: (86-10) **61648274** |
|---|---|

Form PCT/ISA/210 (second sheet) (July 2009)

## INTERNATIONAL SEARCH REPORT
Information on patent family members

International application No.

**PCT/CN2017/074273**

| Patent Documents referred in the Report | Publication Date | Patent Family | Publication Date |
|---|---|---|---|
| CN 101547178 A | 30 September 2009 | CN 101547178 B | 05 September 2012 |
| CN 102143108 A | 03 August 2011 | None | |
| US 2013216239 A1 | 22 August 2013 | WO 2013126207 A1 | 29 August 2013 |
| | | CN 104115423 A | 22 October 2014 |
| | | JP 2015516706 A | 11 June 2015 |
| | | EP 2817900 A1 | 31 December 2014 |
| CN 101228760 A | 23 July 2008 | WO 2006128188 A2 | 30 November 2006 |
| | | JP 2008543186 A | 27 November 2008 |
| | | TW 200705913 A | 01 February 2007 |
| | | US 2006269016 A1 | 30 November 2006 |

Form PCT/ISA/210 (patent family annex) (July 2009)